# EUROPÄISCHE PATENTSCHRIFT

(11) **EP 0 925 419 B1**
(45) Veröffentlichungstag und Bekanntmachung des Hinweises auf die Patenterteilung: **10.12.2003**
(21) Anmeldenummer: 98920480.5
(22) Anmeldetag: 23.03.1998
(51) Int. Cl.: E06B 3/54

(54) **KLEMMBESCHLAG FÜR DIE BEFESTIGUNG VON GLASSCHEIBEN**
CLAMPING FITTING FOR FIXING GLASS PANES
FERRURE DE SERRAGE POUR ASSEMBLER DES VITRES

(30) Priorität: 27.03.1997 DE 29705576 U
(43) Veröffentlichungstag der Anmeldung: 30.06.1999
(73) Patentinhaber: DORMA GmbH + Co. KG, 58256 Ennepetal (DE)
(72) Erfinder: BLÖBAUM, Ernst, Udo, D-33818 Leopoldshöhe (DE)
(86) Internationale Anmeldenummer: EP9801693
(87) Internationale Veröffentlichungsnummer: WO98044233

(56) Entgegenhaltungen:
- DE-A- 4 340 508
- DE-A- 4 436 483
- DE-A- 19 623 797

## Beschreibung

Die Erfindung betrifft einen Klemmbeschlag für die Befestigung von Glasscheiben mit einer in eine Bohrung der Glasscheibe einfassenden Klemmschraube, welche mittels eines im Bereich der Bohrung angeordneten Schraubenschaftendes in axialer Richtung zwischen zwei die Glasscheibe zwischen sich einschließenden Spannelementen festgelegt ist, mit einem lageveränderlichen Anschluss des Schraubenschaftendes am Klemmbeschlag und das erste Spannelement aus einer eine topfartige Ausnehmung aufweisenden Kegelmutter und das zweite Spannelement aus einer mit der Kegelmutter verschraubbaren und das Schraubenschaftende abstützenden Verstellmutter besteht, wobei Vorrichtungen zur abstandsveränderlichen Festlegung des Klemmbeschlages gegenüber einem Befestigungspunkt, beispielsweise einer Wand, vorgesehen sind und im Bereich der Abstützung des Klemmbeschlages an der Unterkonstruktion ein Toleranzausgleich angeordnet ist.

Klemmbeschläge der eingangs genannten Gattung müssen einerseits die Glasscheibe zuverlässig einspannen, andererseits an einem Festpunkt, beispielsweise einer Wand, einem Stahlträger oder dergleichen verankert werden können, Dabei ist zu berücksichtigen, dass die vorgegebenen Bohrlöcher in den Glasscheiben mit den vorgegebenen Bohrlöchern in der Wand, dem Stahlträger oder dergleichen in fluchtende Deckung gebracht werden müssen. Hierzu ist es erforderlich, die das Bohrloch in der Glasscheibe durchfassende Klemmschraube oder die in das Bohrloch der Glasscheibe einfassende Klemmschraube so in der Bohrung zu lagern, dass zwischen der Klemmschraube und der Bohrung ein unmittelbarer Toleranzausgleich möglich ist oder - sofern dies nicht der Fall ist - dafür Sorge zu tragen, dass zwischen der Klemmschraube und anschließenden Befestigungsmitteln ein Toleranzausgleich gegeben ist, der wiederum die direkte oder indirekte Befestigung der Klemmschraube in einer Wand, in einem Träger oder dergleichen möglich macht, ohne dass auf die Glasscheibe Spannungen ausgeübt werden.

Eine weitere Problematik besteht darin, den Abstand zwischen der Glasscheibe und dem Befestigungspunkt, d. h. der Wand oder einem Träger oder dergleichen, veränderbar zu gestalten, um insbesondere bei der Anordnung mehrerer Glasscheiben nebeneinander diese fluchtend zueinander anordnen zu können.

Die Erfindung geht von einem Klemmbeschlag aus, bei dem der Toleranzausgleich zwischen der Glasscheibe und der Klemmschraube in zur Klemmschraube orthogonaler Richtung innerhalb der in der Glasscheibe angeordneten Bohrung erfolgt.

Eine einer Haltevorrichtung für Fassaden- und Dachplatten betreffende Vorrichtung der eingangs genannten Gattung beschreibt die DE 43 40 508 A1. Die Haltevorrichtung besteht aus zwei abstandsveränderlich miteinander verstellbaren und feststellbaren Aufhängeteilen, wobei ein erstes eine Glasscheibe einspannendes Aufhängeteil eine kugelkalottenförmige Ausnehmung für die Aufnahme eines Bestandteil des zweiten Aufhängeteiles bildenden Kugelkopf eines Gelenkbolzens aufweist. Damit erschöpft sich ein Toleranzausgleich zwischen dem ersten Aufhängeteil und dem zweiten Aufhängeteil in einer Schwenkbewegung des Gelenkbolzens gegenüber dem ersten Aufhängeteil. Zur Anpassung des zweiten Aufhängeteiles an den Anschlusspunkt einer Tragkonstruktion im Sinne eines weiteren Toleranzausgleiches ist ein mit dem Gelenkbolzen fest verschraubtes Anschlussstück vorgesehen, welches relativ zu einer an der Tragkonstruktion festlegbaren Schraube verschoben werden kann. Je nach Maßgabe der Verschiebung des Anschlussstückes und damit der Schwenkbewegung des Gelenkbolzens vermindert sich die flächige Anlage des Anschlussstückes an der Oberfläche der Tragkonstruktion und geht in nachteiliger Weise in eine Kantenauflage über.

Ein weiterer Klemmbeschlag ist durch die europäische Patentanmeldung 0 506 522 B1 bekannt geworden; hier wird der Toleranzausgleich innerhalb des Bohrloches in der Scheibe durch das Bohrloch teilweise auskleidende und gegeneinander verdrehbare exzentrische Ringe bewirkt. Ein Toleranzausgleich in axialer Richtung der Klemmschraube, d. h. gegenüber einem Befestigungspunkt, ist in der vorgenannten europäischen Patentanmeldung 0 506 522 B1 nicht offenbart.

Ein Toleranzausgleich der Bohrungen zwischen den beabstandeten Platten einer Mehrfach-Isolier-Glasplatte offenbart das deutsche Gebrauchsmuster 93 18 862. Hier sind sowohl in der äußeren als auch in der inneren Glasplatte Bohrungen relativ großen Durchmessers vorgesehen, wobei im Zuge der Montage der die eigentliche Klemmschraube umgebende Bohrungsraum mit Gießharz ausgespritzt wird. Zur Anpassung der Klemmschraube an den vorgenannten Befestigungspunkt in einer Wand oder dergleichen ist vorgesehen, dass die Klemmschraube mittels eines zwischengeschalteten Kugelgelenkes längsgeteilt ist, wobei zur Befestigung zusätzlich eine Montagehülse vorgesehen ist, in die der die Verlängerung der Klemmschraube bildende Montagebolzen mit der Möglichkeit eines Toleranzausgleichs eingeschraubt und gesichert werden kann. Hierbei handelt es sich um eine relativ aufwändige Lösung mit mehreren Losteilen, die entsprechende Verbindungsmittel zur Verbindung der Losteile erfordern.

Durch die europäische Patentanmeldung 0 617 190 A1 ist eine Vorrichtung zur Verbindung von zwei benachbarten Glasscheiben bekannt geworden, bei der die Klemmschrauben ohne Toleranzausgleich in den Bohrungen der benachbarten Glasscheiben festgelegt sind. Der für die Befestigung an einer Wand oder dergleichen erforderliche Toleranzausgleich erfolgt durch die Verbindung der Klemmschrauben über Kugelgelenke mit einem plattenförmigen Arm, welcher eine Brücke zwischen den beiden benachbarten Klemmschrauben bildet und seinerseits eine Querstange trägt, die der eigentlichen Festlegung an einer Wand, einem Träger oder dergleichen dient. Zur Anpassung an den Befestigungspunkt kann der plattenförmige Arm in unterschiedlichen Positionen gegenüber den Kugelköpfen der Klemmschrauben festgelegt werden. Dabei ist auch eine Verstellung des plattenförmigen Armes in Axialrichtung der Klemmschrauben möglich. Hierbei erfolgt die Axialverstellung über eine unmittelbar in die die Glasscheibe einspannende Klemmverbindung eindrehbare Gewindeschraube mittels einer die Gewindeschraube gegenüber der Klemmverbindung verspannenden Kontermutter. Die Einleitung von Spannungen in die Glasscheibe ist dabei unvermeidlich. Diese Vorrichtung ist nur mit großem Aufwand herzustellen und eignet sich vornehmlich für die fluchtende Ausrichtung benachbarter Glasscheiben.

Schließlich ist durch die europäische Patentanmeldung 0 192 472 ein Klemmbeschlag für eine Mehrfachverglasung bekannt geworden, bei dem die die Bohrung in der Glasscheibe durchfassende Klemmschraube an einem Träger festgelegt ist, wobei die Klemmschraube eine gegenüber dem Klemmschraubendurchmesser vergrößerte Bohrung im Träger durchfasst. Zur Erzielung eines axialen Toleranzausgleiches sind zwischen dem Träger und dem Anlageflansch der Klemmschraube an der Glasscheibe angeordnete Distanzstücke vorgesehen. Es ist ersichtlich, dass zur Anpassung an unterschiedliche, in axialer Richtung bestehende Toleranzdifferenzen unterschiedliche Distanzstücke bereit gehalten werden müssen.

Die Erfindung geht von einem Klemmbeschlag der eingangs genannten Gattung, wie er durch die DE 43 40 508 A1 bekannt geworden ist, aus. Dabei wird angestrebt, bei Voraussetzung eines im Bereich der Bohrung in der Glasscheibe möglichen Toleranzausgleiches zwischen Klemmschraube und Glasscheibe, wie er in der später veröffentlichten EP 0 849 430 A2, bzw. in der entsprechenden deutschen Patentanmeldung P 196 52 773 offenbart ist (insoweit wird hierauf Bezug genommen), eine baulich möglichst einfache, stufenlose Anpassbarkeit des Klemmbeschlages an einen Festpunkt in einer Wand oder dergleichen (Unterkonstruktion) zu erzielen. Dabei ist es insbesondere Aufgabe der Erfindung, eine Möglichkeit zu finden, mit der während der Montage die Glasscheibe gegenüber dem Festpunkt justiert werden kann, dies wiederum insbesondere, wenn mehrere nebeneinander angeordnete Glasscheiben zueinander fluchtend unter Zuhilfenahme einer Lasereinrichtung an einer Wand oder einem Träger (Unterkonstruktion) spannungsfrei befestigt werden müssen.

Die Erfindung löst die gestellte Aufgabe mit der Lehre nach Anspruch 1. Hiernach ist das in die Bohrung der Glasscheibe einfassende Schraubenschaftende verbreitert ausgebildet, wobei das erste Spannelement den Schraubenkopf der Klemmschraube bildet und zwischen den Spannelementen und der Bohrung ein orthogonal zur Längsachse der Klemmschraube wirksamer Toleranzausgleich vorgesehen ist, die Verstellmutter an ihrer der Kegelmutter abgewandten Seite eine mit der Verstellmutter zug- und druckfest verbundene, gegenüber der Verstellmutter in beiden Axialrichtungen der Klemmschraube abstandsveränderliche, an einem Befestigungspunkt, beispielsweise einer Wand, abstützbare Vorrichtung aufweist und die Abstützung des Klemmbeschlages im Bereich des Befestigungspunktes über eine eine Schräglage der Unterkonstruktion orthogonal zur Längsachse der Klemmschraube ausgleichende Vorrichtung erfolgt.

Die Verstellmutter hat somit eine Doppelfunktion; sie dient zum einen der Festlegung des Klemmbeschlages gegenüber der Glasscheibe, zum anderen der abstandsveränderlichen Abstützung des Klemmbeschlages an dem entsprechenden Befestigungspunkt. Ferner ist eine Vorrichtung vorhanden, die neben einer weiteren abstandsveränderlichen Möglichkeit des Klemmbeschlages zu dem Befestigungspunkt die Möglichkeit aufweist, Anpassungen für eine spannungsfreie Montage an Festpunkten vorzunehmen, wodurch gleichzeitig Ungenauigkeiten in der Unterkonstruktion, d. h. Schräglagen oder Unebenheiten ausgeglichen werden können. Dieses wird beispielsweise dadurch erreicht, dass innerhalb einer der Vorrichtungen zur Befestigung der Glasscheibe eine weitere Vorrichtung vorhanden ist,. die nahe dem Befestigungspunkt angeordnet ist. Dabei kann diese Vorrichtung beispielsweise aus einem Einsatz bestehen, der teilweise in die Distanzbuchse eingreift. Ein überstehender Bund ist so ausgebildet, dass er konisch (schräg) ausgeführt ist. Gleichzeitig ist auch das Ende der Distanzbuchse konisch (schräg) ausgeführt, so dass durch ein Verdrehen des Einsatzes beispielsweise Schrägstellungen in der Unterkonstruktion ausgeglichen werden können. Dafür sind innerhalb des Einsatzes große Durchgangsbohrungen enthalten; die eine Verschiebung zur Längsachse des Spannelementes zulassen.

Die Verstellmutter weist an ihrer der Kegelmutter abgewandten Seite eine mit der Verstellmutter zug- und druckfest verbundene, gegenüber der Verstellmutter in beiden Axialrichtungen der Klemmschraube abstandsveränderliche, an einem Befestigungspunkt, beispielsweise einer Wand, abstützbare Vorrichtung auf. Bei der Justierung der Glasscheibe gegenüber der Wand wird während der Montage zum einen durch Veränderung der Einschraubtiefe der Klemmschraube in die Wand der Abstand der Glasscheibe von der Wand bestimmt; zum anderen wird durch die Abstützung der gegenüber der Verstellmutter abstandsveränderlichen Vorrichtung an der Wand die Verstellmutter mit dem verbreiterten Schraubenschaftende verspannt, so dass die Glasscheibe sicher festgelegt ist. Dabei kann die Justierung einerseits durch Veränderung der Einschraubtiefe der Klemmschraube und andererseits durch entsprechende Abstandsveränderung zwischen Verstellmutter und der gegenüber der Verstellmutter abstandsveränderlichen Vorrichtung erfolgen.

Weitere Merkmale der Erfindung sind durch die Unteransprüche gekennzeichnet.

Sofern nur geringe Abstandstoleranzen auszugleichen sind, wird gemäß Anspruch 2 vorgeschlagen, dass die Verstellmutter an ihrer der Kegelmutter abgewandten Seite ein Innengewinde aufweist, in das eine ein korrespondierendes Außengewinde aufweisende, mit einer Stützplatte versehene Distanzierungsschraube einschraubbar ist.

Anspruch 3 berücksichtigt die Notwendigkeit der Überbrückung größerer Toleranzen; hiernach kennzeichnet sich die Erfindung dadurch, dass die Verstellmutter an ihrer der Kegelmutter abgewandten Seite ein Außengewinde aufweist, auf das eine ein korrespondierendes Innengewinde aufweisende, einen Stützflansch für eine Distanzbuchse aufweisende Distanzierungsmutter aufschraubbar ist. Dabei kann die Länge der Distanzbuchse so gewählt werden, dass eine zuverlässige Abstützung der Glasscheibe am Befestigungspunkt möglich ist, ohne dass in die Glasscheibe Spannungen eingeleitet werden. Darüber hinaus hat die erfindungsgemäße Lösung den Vorteil, dass der freiliegende Schraubenschaft der Klemmschraube in optisch vorteilhafter Weise überdeckt wird.

Der Anspruch 4 beschreibt die weiter vorhandene Vorrichtung, die nahe dem Befestigungspunkt an der Wand oder der Unterkonstruktion vorhanden ist. Dabei besteht die Vorrichtung im Wesentlichen aus einer Buchse, die mit einem Ansatz versehen ist, der in die Distanzbuchse eingreift. Das Ende der Distanzbuchse ist jedoch nicht wie üblicherweise gerade zur Längsachse ausgeführt, sondern weist einen schrägen Verlauf auf. An der Buchse, die teilweise in die Distanzbuchse eingreift, ist darüber hinaus auf ihrem Umfang ein Bund vorhanden, der die gleiche Schräge wie die Distanzbuchse aufweist. Diese beiden Schrägen korrespondieren miteinander und können zum einen ein gerades Ende der Distanzbuchse herstellen bzw. bei einer entsprechenden stufenlosen Verdrehung untereinander um z. B. 180° zueinander wird eine Extremstellung erreicht, die aufgrund der vorhandenen Schräge ein Größtmaß an Toleranzausgleich zulässt, der durch beispielsweise schiefe Unterkonstruktionen ausgeglichen werden muss. Durch diese Vorrichtung bleibt die Distanzbuchse zu der bereits vorbeschriebenen Glasscheibe stets in einem Winkel von annähernd 90° und es entstehen dadurch, dass die Klemmschraube in der Unterkonstruktion verankert wird, keine Spannungen, die beispielsweise dann hervorgerufen werden, wenn die Unterkonstruktion nicht zu dem sonst üblicherweise geraden Ende des Distanzstückes fluchtet. Die Klemmschraube ist an ihrem Ende mit einem Gewinde ausgeführt; welches beispielsweise durch die Unterkonstruktion hindurchgesteckt wird, und auf der Gegenseite der Unterkonstruktion kann somit eine Mutter aufgeschraubt werden. Dabei weist die Mutter einen Zentrierschaft auf, der ein sicheres Einführen der Mutter in den in die Distanzbuchse eingeführten Einsatz zulässt. Innerhalb des Einsatzes ist eine größere Bohrung vorhanden, um somit der Schrägstellung der Schraube nicht im Wege zu stehen und damit den entsprechenden Toleranzausgleich zu gewährleisten.

Die Erfindung wird nachfolgend anhand von verschiedenen möglichen schematisch dargestellten Ausführungsbeispielen näher erläutert.

Es zeigen:
- Figur 1:: In einem Querschnitt durch einen Klemmbeschlag ein erstes Ausführungsbeispiel,
- Figur 2:: in einer Seitenansicht auf den Klemmbeschlag ein zweites Ausführungsbeispiel und
- Figur 3:: Teildarstellung des Endbereiches der Distanzbuchse mit eingesetztem Einsatz zum Ausgleich von Fluchtfehlern der Unterkonstruktion.

Soweit erforderlich wurden in den Figuren für gleiche Bauteile gleiche Bezugszeichen verwendet.

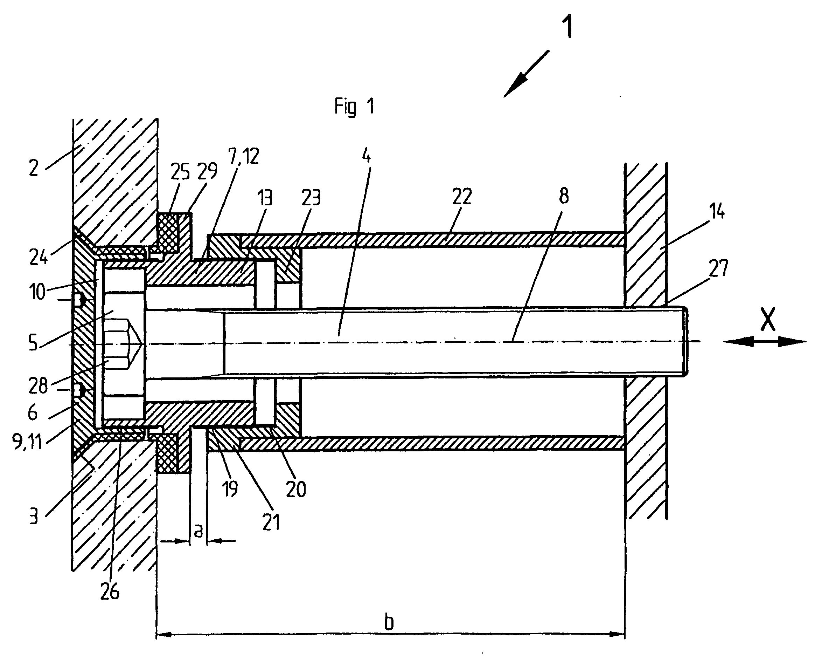

Gemäß Figur 1 wird mittels eines allgemein mit 1 bezeichneten Klemmbeschlages eine Glasscheibe 2 festgelegt. Hierzu ist in der Glasscheibe 2 eine Bohrung 3 vorgesehen, die von der einen Seite ein erstes Spannelement 6 unter Zwischenschaltung eines Klemmringes 24 eingesetzt ist. Das Spannelement 6 ist als Kegelmutter 11 ausgebildet und stellt praktisch den Schraubenkopf 9 der Klemmschraube 4 dar. Die Kegelmutter 11 besitzt eine topfärtige Ausnehmung 10, in die über das Gewinde 26 das zweite Spannelement 7, welches als Verstellmutter 12 ausgebildet ist, eingeschraubt ist. Mittels der Kegelmutter 11 einerseits und der Verstellmutter 12 andererseits, die einen Anlageflansch 29 aufweist, kann die Glasscheibe 2 eingespannt werden. Zwischen dem Anlageflansch 29 und der Glasscheibe 2 ist ein Glasschutz 25 vorgesehen.

Es ist weiter erkennbar, dass die Verstellmutter 12 an ihrer der Kegelmutter 11 abgewandten Seite 13 ein Außengewinde 19 aufweist, auf das über ein korrespondierendes Innengewinde 20 eine Distanzierungsmutter 23 aufgeschraubt ist. Die Distanzierungsmutter 23 besitzt einen Stützflansch 21, an dem sich eine Distanzbuchse 22 abstützt, die andererends an der hier als Stahlträger dargestellten Wand 14 abgestützt ist. Im dargestellten Ausführungsbeispiel ist die Klemmschraube 4 über ein Gewinde 27 in die Wand 14 eingeschraubt.

Es ist ersichtlich, dass durch entsprechendes Verschrauben der Distanzierungsmutter 23 mit der Verstellmutter 12 der Abstand a zwischen der Distanzierungsmutter 23 und der Verstellmutter 12 und damit der Abstand b zwischen der Glasscheibe 2 und der Wand 14 verändert werden kann, sofern der Abstand des verbreiterten Schraubenschaftendes 5 von der Wand 14 durch Veränderung der Einschraubtiefe der Klemmschraube 4 verändert wird.

Die Einschraubtiefe der Klemmschraube 4 selbst kann über den im verbreiterten Schraubenschaftende 5 angeordneten Innensechskant 28 eingestellt werden.

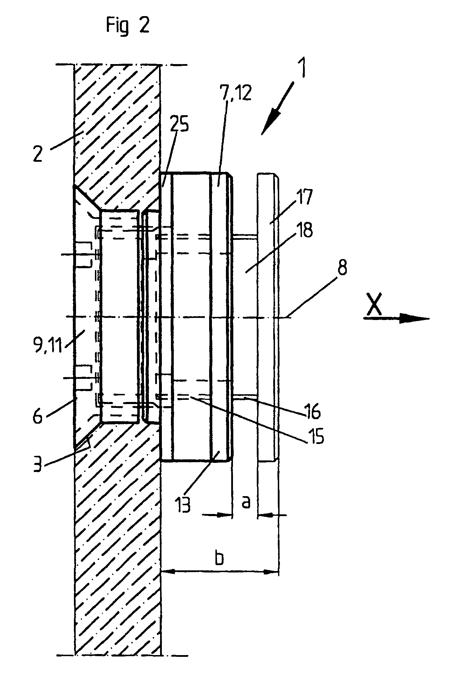

Das Ausführungsbeispiel nach Figur 2 findet Verwendung, wenn nur ein geringer Abstand a bzw. b auszugleichen ist; hier besitzt die Verstellmutter 12 ein Innengewinde 15, in das eine ein Außengewinde 16 aufweisende Distanzierungsschraube 18 einschraubbar ist. Die Distanzierungsschraube 18 ist mit einer Stützplatte 17 versehen, die sich an einer nicht dargestellten Wand abstützen kann. Es versteht sich, dass auch im Ausführungsbeispiel nach Figur 2 die in der Figur 1 dargestellte Klemmschraube 4 vorgesehen ist.

Bei der Montage des Klemmbeschlages 1 nach dem Ausführungsbeispiel nach Figur 1 werden auf die Klemmschraube 4 zunächst die Verstellmutter 12, die Distanzierungsmutter 23 und die Distanzbuchse 22 aufgebracht; anschließend wird die Klemmschraube 4 in die Wand 14 eingeschraubt.

Nach Aufstecken des Glasschutzes 25 wird die Verstellmutter 12 unter Nutzung des vorbeschriebenen Toleranzausgleiches in vier Freiheitsgraden so weit verdreht, dass sie passend in die Bohrung 3 der Glasscheibe 2 eingeführt werden kann. Nach Maßgabe eines Laserstrahles kann nunmehr die am Glasschutz 25 anliegende Glasscheibe 2 unter Veränderung der Einschraubtiefe der Klemmschraube 4 mittels des Innensechskantes 28 justiert werden, wobei gleichzeitig durch entsprechendes Verdrehen der Distanzierungsmutter 23 eine ständige Abstützung der Distanzbuchse 22 an der Wand 14 erfolgt, was zur Folge hat, dass das verbreiterte Schraubenschaftende 5 immer kraftschlüssig an der Verstellmutter 12 anliegt. Die Justierung der Glasscheibe 2 erfolgt somit durch aufeinander abgestimmtes Verdrehen der Klemmschraube 4 einerseits und der Distanzierungsmutter 23 andererseits.

Nach erfolgter Justierung kann der Schraubenkopf 9 unter Zwischenfügung des Klemmringes 24 auf die Verstellmutter 12 aufgeschraubt werden.

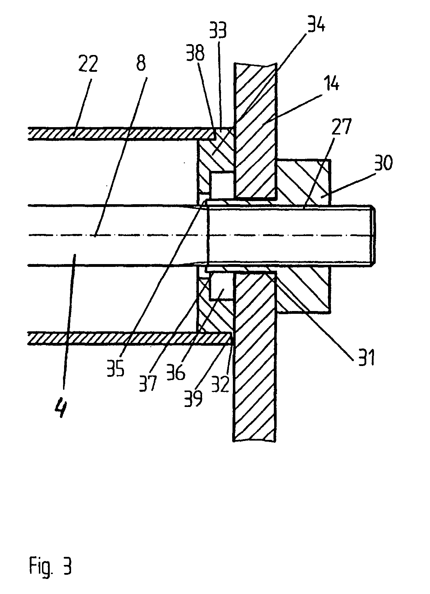

Bei Unterkonstruktionen 14, die beispielsweise untereinander nicht fluchtend hergestellt werden konnten oder sind, ist ein weiterer Ausgleich zum spannungsfreien Anbringen der Glasscheiben 2 über die Klemmschraube 4 notwendig. Im Gegensatz zu den bereits vorbeschriebenen Ausführungsbeispielen der Figuren 1 und 2 ist innerhalb der Wand 14, die beispielsweise eine Stahlkonstruktion sein kann, eine Durchgangsbohrung 31 vorhanden. Durch diese Durchgangsbohrung 31 wird die Klemmschraube 4 hindurchgesteckt und mit einer Befestigungsmutter 30 auf der Gegenseite der Distanzbuchse 22 verschraubt. Die Distanzbuchse 22 ist im Gegensatz zu den Ausführungsbeispielen der Figuren 1 und 2 an ihrem Ende nicht gerade ausgeführt, vielmehr weist sie eine Abschrägung gegenüber der Längsachse 8 auf, d. h. der Endbereich der Distanzbuchse 22 steht nicht in einem rechten Winkel zur Längsachse 8. Innerhalb des Endbereiches der Distanzbuchse 22 ist ein Einsatz 34 eingesetzt. Dieser Einsatz 34 weist einen Ansatz auf, der in die Distanzbuchse 22 eingreift. Gleichzeitig ist auch ein umlaufender Bund 32, 33 vorhanden, der ebenfalls schräg (konisch) gesehen zur Längsachse 8 angeordnet ist. In dem Ausführungsbeispiel der Figur 3 ist die quasi Nullstellung wiedergegeben worden, d. h. die Wand 14 ist plan ausgeführt, so dass ein Verdrehen des Einsatzes 34 bzw. der Distanzbuchse 22 zum Einsatz 34 nicht ausgeführt werden muss. Ist aber die Wand 14 nicht im rechten Winkel zu der Längsachse 8 ausgerichtet, so kann durch Verdrehen des Einsatzes 34 zur Distanzbuchse 22 quasi diese Schiefstellung ausgeglichen werden, ohne dass dadurch beim Anziehen der Befestigungsmutter 30 Spannungen innerhalb der Glasscheibe 2 auftreten. Bei einem Verdrehen des Einsatzes 34 gegenüber der Distanzbuchse 22 gerät diese in eine Schieflage, so dass eine größere Bohrung 35 innerhalb des Einsatzes 34 vorhanden ist, als üblicherweise die Klemmschraube 4 erfordert. Im Anschluss an die Bohrung 35 ist eine Stufenbohrung 36 mit einem noch größeren Durchmesser vorhanden, so dass in diese sicher ein Zentrierschaft 37 der Befestigungsmutter 30 eingreifen kann. Die schrägen Enden in der Schnittdarstellung der Figur 3 der Distanzbuchse 22 sind in dieser Stellung mit 38 und 39 bezeichnet worden.

Somit ist durch den erfindungsgemäßen Gedanken der Distanzbuchse 22 sowohl ein Längentoleranzausgleich beim Befestigen der Glasscheiben und damit ein Fluchten untereinander gegeben, wobei gleichzeitig auch eine spannungsfreie Montage durch die Ausbildung des Endes der Distanzbuchse 22 einen weiteren Toleranzausgleich zur Unterkonstruktion (Wand 14) zulässt. Im Gegensatz zu dem dargestellten Ausführungsbeispiel der Figur 3 kann auch, wie in den Ausführungsbeispielen der Figuren 1 und 2, die Klemmschraube 4 direkt in die Wand 14 über das Gewinde 27 eingeschraubt werden.

### Bezugszeichenliste

- 1: Klemmbeschlag
- 2: Glasscheibe
- 3: Bohrung
- 4: Klemmschraube
- 5: Schraubenschaftende
- 6: Spannelement
- 7: Spannelement
- 8: Längsachse
- 9: Schraubenkopf
- 10: topfartige Ausnehmung
- 11: Kegelmutter
- 12: Verstellmutter
- 13: Seite
- 14: Wand
- 15: Innengewinde
- 16: Außengewinde
- 17: Stützplatte
- 18: Distanzierungsschraube
- 19: Außengewinde
- 20: Innengewinde
- 21: Stützflansch
- 22: Distanzbuchse
- 23: Distanzierungsmutter
- 24: Klemmring
- 25: Glasschutz
- 26: Gewinde
- 27: Gewinde
- 28: Innensechskant
- 29: Anlageflansch
- 30: Befestigungsmutter
- 31: Durchgangsbohrung
- 32: Bund
- 33: Bund
- 34: Einsatz
- 35: Bohrung
- 36: Stufenbohrung
- 37: Zentrierschaft
- 38: Ende der Distanzbuchse
- 39: Ende der Distanzbuchse

- X: Pfeilrichtung
- a: Abstand
- b: Abstand

## Patentansprüche

1. Klemmbeschlag (1) für die Befestigung von Glasscheiben (2) mit einer in eine Bohrung (3) der Glasscheibe (2) einfassende Klemmschraube (4), welche mittels eines im Bereich der Bohrung (3) angeordneten Schraubenschaftendes (5) in axialer Richtung zwischen zwei die Glasscheibe (2) zwischen sich einschließenden Spannelementen (6, 7) festgelegt ist, mit einem lageveränderlfchen Anschluss des Schraubenschaftendes (5) am Klemmbeschlag (1) und wobei das erste Spannelement (6) aus einer eine topfartige Ausnehmung (10) aufweisende Kegelmutter (11) und das zweite Spannelement (7) aus einer mit der Kegelmutter (11) verschraubbaren und das Schraubenschaftende (5) abstützenden Verstellmutter (12) besteht, wobei Vorrichtungen zur abstandsveränderlichen Festlegung des Klemmbeschlages (1) gegenüber einem Befestigungspunkt, beispielsweise einer Wand (14), vorgesehen sind und im Bereich der Abstützung des Klemmbeschlages (1) an der Unterkonstruktion ein Toleranzausgleich angeordnet ist, **gekennzeichnet durch** folgende Merkmale:
a) Das in die Bohrung (3) der Glasscheibe (2) einfassende Schraubenschaftende (5) ist verbreitert ausgebildet, wobei das erste Spannelement (6) den Schraubenkopf (9) der Klemmschraube (4) bildet und zwischen den Spannelementen (6, 7) und der Bohrung (3) ein orthogonal zur Längsachse (8) der Klemmschraube (4) wirksamer Toleranzausgleich vorgesehen ist;
b) die Verstellmutter (12) weist an ihrer der Kegelmutter (11) abgewandten Seite eine mit der Verstellmutter (12) zug- und druckfest verbundene, gegenüber der Verstellmutter (12) in beiden Axialrichtungen der Klemmschraube (4) abstandsveränderliche, an einem Befestigungspunkt, beispielsweise einer Wand (14), abstützbare Vorrichtung auf;
c) die Abstützung des Klemmbeschlages (1) im Bereich des Befestigungspunktes erfolgt über eine eine Schräglage der Unterkonstruktion orthogonal zur Längsachse (8) der Klemmschraube (4) ausgleichende Vorrichtung.

2. Klemmbeschlag nach Anspruch 1, **dadurch gekennzeichnet, dass** die Verstellmutter (12) an ihrer der Kegelmutter (11) abgewandten Seite (13) ein Innengewinde (15) aufweist, in das eine ein korrespondierendes Außengewinde (16) aufweisende, mit einer Stützplatte (17) versehene Distanzierungsschraube (18) einschraubbar ist.

3. Klemmbeschlag nach Anspruch 1, **dadurch gekennzeichnet, dass** die Verstellmutter (12) an ihrer der Kegelmutter (11) abgewandten Seite (13) ein Außengewinde (19) aufweist, auf das eine ein korrespondierendes Innengewinde (20) aufweisende, einen Stützflansch (21) für eine Distanzbuchse (22) aufweisende Distanzierungsmutter (23) aufschraubbar ist.

4. Klemmbeschlag nach Anspruch 1, **dadurch gekennzeichnet, dass** die Vorrichtung zum Ausgleich der Schräglagen der Unterkonstruktionen nahe dem Befestigungspunkt aus einer Buchse (34) besteht, die mit einem Ansatz in die Distanzbuchse (22) eingreift, wobei das Ende der Distanzbuchse (22) schräg zu deren Längsachse verläuft (Ende der Distanzbuchse 38, 39) und an der Buchse (34) ein ebenfalls schräg verlaufender Bund (32, 33) vorhanden ist, der gegen die Distanzbuchse (22) anliegt.

5. Klemmbeschlag nach Anspruch 4, **dadurch gekennzeichnet, dass** in der Buchse (34) eine Bohrung (35) vorhanden ist, die von der Klemmschraube (4) durchdrungen wird.

## Claims

1. Clamping fitting (1) for the attachment of glass panes (2) comprising a clamp screw (4) engaging into a borehole (3) in the glass pane (2), which, by means of a screw shaft end (5) in the region of the borehole (3), is secured in axial direction between two clamping elements (6, 7) embracing the glass pane (2) therebetween, with a position-variable connection of the screw shaft end (5) at the clamping fitting (1 ), and the first clamping element (6) being composed of a cone nut (11) presenting a pot-like cut-out (10), and the second clamping element (7) being composed of an adjustable lock nut (12) screwable with the cone nut (11) and supporting the screw shaft end (5), devices being provided for the distance-variable securing of the clamping fitting (1) with regard to an attachment point, for example a wall, and a tolerance compensation being provided in the region of the support of the clamping fitting (1) at the sub-structure, **characterized by** the following features:
a) the screw shaft end (5) engaging into the borehole (3) of the glass pane (2) is tapered, the first clamping element (6) forming the screw head (9) of the clamping screw (4) and a tolerance compensation being provided between the clamping elements (6, 7) and the borehole (3), effective in orthogonal direction with regard to the longitudinal axis (8) of the clamping screw (4);
b) at its side opposite to the cone nut (11) the adjustable lock nut (12) presents a device, which is distance-variable with regard to the adjustable lock nut (12) in both axial directions of the clamping screw (4), is supportable at an attachment point, for example a wall (14), and is connected to the adjustable lock nut (12) with resistance to tension and pressure,
c) the support of the clamping fitting (1) in the region of the attachment point is realized by means of a device compensating for an oblique position of the sub-structure in orthogonal direction with regard to the longitudinal direction (8) of the clamping screw (4).

2. A clamping fitting according to claim 1, **characterized in that**, at its side (13) opposite to the cone nut (11), the adjustable lock nut (12) presents a female thread (15) into which a spacing screw (18) can be screwed, which presents a corresponding male thread (16) and is provided with a support plate (17).

3. A clamping fitting according to claim 1, **characterized in that**, at its side (13) opposite to the cone nut (11 ), the adjustable lock nut (12) presents a male thread (19) onto which a spacing nut (23) can be screwed, which presents a corresponding female thread (20) and presents a support flange (21) for a spacing sleeve (22).

4. Clamping fitting according to claim 1, **characterized in that** the device, serving to compensate oblique positions of the sub-structure adjacent to the attachment point, consists of a sleeve (34), which engages with an extension into the spacing sleeve (22), the end of the spacing sleeve (22) extending in an oblique direction with regard to the longitudinal axis thereof (end of spacing sleeve 38, 39), and the sleeve (34) being likewise provided with a collar (32, 33) extending in an oblique direction, which is sitting close to the spacing sleeve (22).

5. Clamping fitting according to claim 4, **characterized in that** the sleeve (34) is provided with a borehole (35) which is penetrated by the clamping screw (4).

## Revendications

1. Ferrure de serrage (1) pour la fixation de plaques en verre (2) comprenant une vis de serrage (4) pénétrant l'alésage (3) dans la plaque en verre (2) et étant fixée par l'intermédiaire d'une extrémité du corps de vis (5) agencée dans la région de l'alésage (3) dans une direction axiale entre deux éléments de serrage (6, 7) qui renferment entre eux la plaque en verre (2), un raccord de l'extrémité du corps de vis (5) à position variable sur la ferrure de serrage (1) et le premier élément de serrage (6) étant constitué par un écrou conique (11) présentant un décrochement (10) en forme de pot et le deuxième élément de serrage (7) étant constitué d'un écrou de réglage (12) pouvant être vissé avec la vis conique (11) et supportant l'extrémité du corps de vis (5), des dispositifs étant prévus pour la fixation variable en distance de la ferrure de serrage (1) par rapport à un point de fixation, par exemple une paroi (14), et, dans la région du support de la ferrure de serrage (1) sur la construction de base, une compensation de tolérances étant prévue, **caractérisée par** les caractéristiques suivants ;
a) l'extrémité du corps de vis (5) s'engageant dans l'alésage (3) de la plaque en verre (2) est réalisée en s'élargissant, le premier élément de serrage (6) formant la tête de vis (9) de la vis de serrage (4) et une compensation de tolérances, prenant effet en direction orthogonale par rapport à l'axe longitudinal (8) de la vis de serrage (4), étant prévue entre les éléments de serrage (6, 7) et l'alésage (3);
b) l'écrou de réglage (12) présente, à son côté opposé à l'écrou conique (11), un dispositif qui est connecté avec l'écrou de réglage (12) de façon à résister à la traction et à la pression et de façon à être variable en distance par rapport à l'écrou de réglage (12) dans les deux directions axiales de la vis de serrage (4) et qui peut être supporté sur un point de fixation, par exemple une paroi (14) ;
c) le support de la ferrure de serrage (1) dans la région du point de fixation se fait par l'intermédiaire d'un dispositif compensant une position oblique de la construction de base en la direction orthogonale de l'axe longitudinale (8) de la vis de serrage (4).

2. Ferrure de serrage selon la revendication 1, **caractérisée en ce que**, sur sa face (13) opposée à l'écrou conique (11), l'écrou de réglage (12) présente un taraudage (15) dans lequel se visse une vis d'écartement (18) présentant un filetage (16) correspondant et étant munie d'une plaque de d'appui (17).

3. Ferrure de serrage selon la revendication 1, **caractérisée en ce que** sur, sa face (13) opposée à l'écrou conique (11), l'écrou de réglage présente un filetage (19) sur lequel se visse un écrou d'écartement (23) présentant un taraudage (20) correspondant et présentant une collerette de d'appui (21) pour un manchon d'écartement (22).

4. Ferrure de serrage selon la revendication 1, **caractérisé en ce que** le dispositif, pour la compensation de positions obliques de la sous construction dans la proximité du point de fixation, est constitué d'un manchon (34), qui engage avec une embase dans le manchon d'écartement (22), l'extrémité du manchon d'écartement (22) s'étendant à l'oblique par rapport à son axe longitudinal (extrémité du manchon d'écartement 38, 39) et une collerette (32, 33) s'étendant également à l'oblique, est prévue sur le manchon (34), qui se bute contre le manchon d'écartement (22).

5. Ferrure de serrage selon la revendication 4, **caractérisé en ce que** le manchon (34) est muni d'un alésage (35) lequel est traversé par la vis de serrage (4).
